# EUROPEAN PATENT SPECIFICATION

(11) **EP 0 724 660 B1**
(45) Date of publication and mention of the grant of the patent: **04.06.1997**
(21) Application number: 94926112.7
(22) Date of filing: 31.08.1994
(51) Int. Cl.: D06N 7/00, A47G 27/00, B32B 27/04

(54) **LOW-STRETCH AND DIMENSIONALLY STABLE FLOOR COVERING**
WENIG DEHNBARE UND DIMENSIONSSTABILE BODENBEDECKUNGEN
MOQUETTE A FAIBLE ELASTICITE DE BONNE STABILITE DIMENSIONNELLE

(30) Priority: 01.09.1993 NL 9301511; 02.11.1993 DK 1235/93; 14.12.1993 US 166379
(43) Date of publication of application: 07.08.1996
(73) Proprietor: FIBERTEX A/S, DK-9220 Alborg Ost (DK)
(72) Inventor: JUSTESEN, Knud, Erik, DK-9210 Alborg SO (DK); JESSEN, Lars, Valbaek, DK-8600 Silkeborg (DK); MADSEN, Jorgen, Bech, DK-9000 Alborg (DK); NYGAARD, Mogens, Ovesen, NL-6714 LS Ede (NL)
(74) Representative: Christiansen, Ejvind
(86) International application number: DK9400326
(87) International publication number: WO9506771

(56) References cited:
- EP-A- 0 005 050
- EP-A- 0 278 690
- EP-A- 0 420 661
- EP-A- 0 547 533
- US-A- 4 342 813

## Description

### BACKGROUND OF THE INVENTION

The present invention concerns a low-stretch floor covering material applicable both as wall-to-wall (broad loom) carpets and as carpet tiles, said material exhibiting both a dimensional stability under climatic changes and the ability to be wound onto broadloom rollers.

The invention further concerns a method of manufacturing a floor covering of the kind stated in the introduction and in which in an initial production step a web-formed semi-manufactured material is produced which comprises pile material being retained to a primary backing layer.

Low-stretch and dimensionally stable floor coverings include wall-to-wall (also often called broadloom) carpets and carpet tiles exhibiting a low degree of shrinkage and/or expansion lengthwise and/or widthwise, and consequently being highly capable of resisting varying moisture and heat impacts in use. Especially within the field of contract applications the dimensional stability of carpet tiles is to-day - due to their construction - considerably higher than that of broadloom carpets. To compensate for the lower dimensional stability of broadloom carpets they are for contract applications to-day glued down to sub-floors by means of a permanent glue. Carpet tiles are only installed and glued down by means of tackifier or are simply meant to be held in place by their high weight.

The known low-stretch and dimensionally stable floor coverings when used as wall-to-wall carpets comprise a semi-manufactured material with pile material which is retained to a primary backing layer having a secondary backing layer which e.g. may consist of a coating of natural rubber, chalk-filled (calciumcarbonate-filled) SBR-latex foam or polyurethane foam or the like. These backing layers are normally applied in a thickness of 2-8 mm. Because of their elastomeric properties foamed backing layers contribute significantly to the walking comfort. Additionally, the foamed backing layers also provide good temperature and sound insulation.

These known foamed backing layers, however, entail significant adverse environmental impacts, which are undesired in particular in the light of the present strict demands on environmentally friendly and re-usable products. By re-usable products are meant products containing components which can be melted down and again enter into a production process, or components which by incineration give approximately null residual ash percentage. The foamed backing layers often give off residual gases for prolonged periods after production entailing risk of nuisance to the indoor climate in the room where the carpet has been laid out. At the same time it is a problem that the foamed backing layers after use for some length of time of the floor covering stick so well to the underlying floor that the foamed backing layer often in very large areas is separated from the floor covering when worn-out floor covering is to be removed. The large areas with attaching remains of foamed backing layers must then be removed in a time-consuming working operation before a new floor covering can be laid on the floor.

The most significant disadvantage of the known floor coverings with foamed backing layer, however, consists in the limited possibilities of disposing of the used carpet coverings and the related unfortunate environmental impacts. In case of e.g. foamed chalk-filled SBR-latex backing coatings on worn out wall-to-wall carpets it is in practice at disposal only possible to achieve the level "incineration without energy recovery". Chalk-filled foam backing layer contain a high concentration of inorganic materials which are left as ash after incineration.

The generally known carpet tiles are widely used in particular as so-called project carpeting, that is, carpet especially for contract areas and for industrial use. Understood herein by carpet tile is a regularly formed piece of carpet which (measured according to norms formulated for this purpose by inspection agencies such as for instance TNO) has a shape and dimension stability sufficient to form a continuous floor covering under all conditions.

In such applications carpet tiles have great advantages compared with conventional broadloom carpets. The tiles are for instance easy to take up, whereby easy access can be obtained to the space under the floor for (re)positioning for instance computer and electricity cables. Carpet tiles can also be easily laid without unnecessary disruption of the normal activities in a room area. In addition, carpet tiles can be replaced locally in simple manner, which is advantageous when particular parts of a room area are used more intensively than others. They are also compact and therefore simple to transport, particularly in high-rise office buildings where rolls of carpet can cause great transport problems.

The known carpet tiles are usually provided with a relatively heavy secondary backing layer and binder layer in order to ensure their shape and dimension stability. The secondary backing layer is generally made of a strong coating of glass-reinforced bitumen or glass-reinforced PVC coating. The specific weight of a conventional carpet tile therefore amounts to roughly 5 kilograms per square metre.

A representative example of such carpet tiles is described in EP-A-0 278 690. In order to provide a carpet tile with good dimensional stability, good lay flat characteristics, and which may be produced by an in-line production method, a carpet tile is suggested, which comprises a fibrous face wear surface secured to a primary backing sheet,
a first precoat layer on the primary backing surface and comprising a hotmelt bitumen or petroleum resin composition,
a second precoat layer secured to the first coating layer and which second coating layer comprises a bitumen hotmelt composition,
a third coat backing layer which comprises a bitumen hotmelt composition, and
a secondary backing sheet material to provide dimensional stability to the carpet and secured to the third coating backing layer. Dimensional stability is achieved by the secondary backing comprising a woven or non-woven glass fibre scrim and by the high total weight of the tile.

In order to further improve the dimensional stability EP-A-0 420 661 describes a carpet tile comprising a wear surface and a primary backing comprising a solid, hotmelt composition and a secondary backing composed of adjacent layers of a porous, glass fibre sheet material e.g. tissue, non-woven glass fibre and a porous, fibrous sheet material with a fibrous sheet material as the exterior surface of the secondary backing layer, and wherein the hotmelt composition has penetrated and saturated the glass fibre material but has only partially penetrated the fibrous sheet material sufficiently to bond the fibrous sheet material. Typically, the carpet tile comprises a fibrous carpet material wherein the primary backing is a bitumen or a bitumen modified hotmelt composition. The secondary backing comprises separate, adjacent layers of a porous, lightweight glass fibre tissue sheet material which in itself gives the carpet tile the improved dimensional stability. However, non-woven sheet material of polypropylene is characterized as not in itself being a satisfactory material as a secondary backing carrier sheet.

EP-A-0 590 189 was filed on December 30, 1992 and published on April 6, 1994 for DE, FR, GB, and NL. It confirms the disadvantages of prior art carpet tiles comprising bitumen/asphalt backing members or PVC-backings.
According to one embodiment of this invention a tile-shaped carpet is provided which comprises a backing member and an upper layer formed on the backing member, both of which are made of a propylene resin. Preferably the upper layer includes a base fabric sublayer and a pile sublayer, both of which are made of propylene resin.
While reference is made to polypropylene fibres as part of the upper layer, the backing member is only described as being made of either propylene, monopolymer or copolymers of propylene and ethylene butene-1 and the like, which may comprise a regenerated product of the propylene resin. It is preferred to use an amorphous alpha-olefincoplymer and in fact the only embodiment specifically described is extrusion-moulded back-up members. The document comprises no reference to needled and textiled back-up members.

The known carpet tiles have a large number of drawbacks, however. The disposal and processing of the tiles at the end of their useful life thus causes great problems due to the nature and quantity of the materials used. When they are burned a significant portion, up to about 60% by weight, of the bitumen-containing tiles is left over in the form of ash.

Incineration of products such as tiles with PVC backing layers demands high energy supply during incineration, because PVC contains chlorine which uses energy during incineration instead of generating energy. Chlorine is also a toxic and etching gas which easily reacts with other inorganic and organic substances, wherefore incineration of floor coverings with PVC backing layer calls for special environmental measures during the incineration process.

It is moreover expected that the problems associated with the processing of waste tiles will become more pressing in the future since, with regard to the large numbers of carpet tiles laid and replaced annually (in Europe more than 40 million square metres with a weight of about 200,000 tons), legal requirements relating to the environmentally friendly processing thereof can be anticipated in the short term.

In addition, due to their comparatively heavy weight the known carpet tiles can only be simultaneously transported and laid in relatively small quantities. Moreover there is a considerable danger of back disorders for the carpet installers.

As previously mentioned the construction of carpet tiles and broadloom carpets is totally different. Therefore, carpet tiles and broadloom carpet have conventionally been produced by different processes and on different types of manufacturing equipment. This has been due to the mentioned different materials which the carpet industry has had to use until now for meeting the application requirements for these two different products. For manufacturing carpet tiles the relatively stiff, heavy weight backing of bitumen or PVC with glass have been used, or for broadloom carpets the backing has conventionally been relatively flexible, been consisting of calcium carbonate filled foam or equivalent materials. So far it was therefore not possible to integrate the manufacture of these two types of carpets in one and the same process.

From EP-A-0547533 a stretchable floor covering is known which when being laid out are often stretched by many percent lengthwise and widthwise, whereafter the edges of the stretchable floor covering are secured to adjoining panels by means of nail lists or the like. The secondary backing layer is instead of the previously known foamed coatings constituted by a backing layer with a fibre structure being embedded in or encompassed by a textile bonding so as to impart acceptable strength properties to the secondary backing layer for use as a stretchable floor covering. By the textile bonding is meant that the fibre structure may e.g. be needlepunched to an underlying strength imparting web, or that the fibre structure is provided with stitches or loops in the longitudinal and cross-sectional directions, e.g. according to the known Maliwatt or Kettenwirk principles. The specification, however, provides no directions for a backing layer with a fibre structure being sufficiently dimensionally stable in the longitudinal and cross-sectional directions for enabling production of a low-stretch and dimensionally stable floor covering possessing the same strength and dimensional stability properties and walking comfort as the known floor coverings with foamed backing layers and the same dimensional stability as the known carpet tiles.

EP-A-0005050 describes carpet backing materials comprising thermoplastic backing fabrics which might be non-woven and to which a substantially flat fleece is attached. In order to solve the problem commonly referred to as "grinning", viz. that the backing material is clearly visible in the finished carpet, the fleece is adhered to the backing fabric by means of a hot melt powder adhesive having a softening point below that of the thermoplastic fabric.

To a skilled person, it is apparent that EP-A-0005050 relates to broadloom carpets and that the backing referred to is the primary backing on which the hot melt powder adhesive serves as a precoat enhancing the tuft locking of the more easily dyable pile material in the form of a fleece to the primary backing, which may later be provided with a secondary foam backing as usual for broadloom carpets.

### SUMMARY OF THE INVENTION

Consequently, it is the object of the present invention to provide a low-stretch and dimensionally stable floor covering possessing the same strength and dimensional stability properties and walking comfort as the known floor coverings, such as broadloom carpets having the undesired foamed backing layers and carpet tiles having glass scrim reinforced PVC- or bitumen-containing backing layers, and at the same time making it possible to avoid the undesired environmental impacts when disposing of the used floor coverings. The new floor covering should be applicable both as wall-to-wall carpets and as carpet tiles to be used optionally within the same fields, such as the contract areas, without the previously mentioned drawbacks for neither the wall-to-wall carpets nor the carpet tiles.

The low-stretch and dimensionally stable floor covering according to the present invention comprises the features indicated in claim 1.

The method of producing the low-stretch and dimensionally stable floor covering according to the invention comprises the steps indicated in claim 24.

The invention also provides the installation of a floor covering material according to claim 32.

Hereby is achieved that it is possible to produce a low-stretch and dimensionally stable floor covering having a secondary backing layer of a needled fibre structure and having the same strength and stability properties both length-wise, widthwise, and cross-sectionally as well as walking comfort as the known floor coverings with the traditional undesired backing layers whether we are talking about wall-to-wall carpets or carpet tiles. The invention completely eliminates the environmental impacts at disposal as compared to the said known floor coverings. This applies for both wall-to-wall carpets and carpet tiles as these two floor covering products according to the invention are now identical.

By the invention it is surprisingly possible on the same equipment to produce a floor covering which optionally can be used as wall-to-wall carpets or as carpet tiles.

In view of the substantial thickness and the constitution of the tiles described in EP-A-0 278 690, EP-A-0 420 661, and EP-A-0 590 189, it was highly surprising that a satisfactory floor covering which is suitable both as broadloom and as carpet tiles could be obtained by leaving out the numerous layers of bitumen, glass fibres etc.

In addition to the environmental advantages and a reduced consumption of materials etc. this invention is of great commercial value to the broadloom manufacturers who were not previously in a position to manufacture carpet tiles. This invention can be applied using existing equipment and, for a relatively low investment offers the broadloom manufacturer the opportunity to enter the market for carpet tiles.

The secondary backing layer is made in that a needled fibre web of either continuous fibres or staple fibres of an essentially non-moisture absorbing thermoplastic polymer containing material is heated to the softening temperature of the fibres, whereby they are adhered together to form a backing layer having a three-dimensional mechanically cross-bonded fibre structure where the fibres are inter-fixated. The fibres, which are three-dimentionally oriented will during force impact and slackening (walking effect) counteract the tension and somewhat return to their original fibre structure. This property is called re-raising capacity (resilience). In the fibre structure according to the invention the individual fibres are connected and fixated to each other to form the three-dimensional fibre structure, which is to be seen in contrast to a fibre structure where the fibres are only retained to each other mechanically and may consequently slip away from each other during force impact so that the stability is significantly reduced and the re-raising capacity will quickly be lost. By inter-fixating the three-dimensional fibre structure stability and comfort in the secondary backing is increased.

Heat application to the fibre structure may be performed by calendering the fibre structure either on one side or on both sides or may be performed by blowing hot air through the fibre structure, or a combination of the said two thermal treatment processes. The heat application may also be performed by IR-radiation, i.e. treatment with infra-red rays or similar methods.

The fibre structure may both comprise continuous or staple fibres having a length of 20-200 mm and fibre thicknesses from 1.5dtex to 50dtex. Most often the choice will be staple fibres in the interval 40-110 mm fibre length and 3.3-20dtex fibre thickness. The weight of the fibre structure of the secondary backing layer will essentially lie between 70g/m² and 1000g/m², in particular between 100 g/m² and 600g/m². The heaviest backing layers are used for carpet for applications calling for particularly high walking comfort.

The fibre structure may be composed of fibre types which are used either 100% pure or in mixtures - and with varying thicknesses and lengths. Thus the fibre structure may consist of a mixture of synthetic fibres, such as polymers and copolymers based on polyamide, polyester, polyolefines (polypropylene and polyethylene) or polyacrylates. Applicable copolyesters may e.g. be based on terephthalic acid and various polyglycols and/or other aromatic carboxylic acids and alcohols. Applicable copolyamides may comprise 2, 3 or 4 different polyamides, e.g. polyamide 6, polyamide 6,6 and polyamide 12. The presently preferred thermoplastic polymer is polypropylene.

Thus fine results are obtainable as regards both walking comfort and re-raising capacity of the secondary backing layer when the fibre structure has a fibre content of 100% identical thermoplastics or a fibre content of mixtures of thermoplastics within the same group of polymers or different groups of polymers, but with different softening temperatures. A fibre content of a polymer with a lower softening temperature can thus be utilized to increase the thermal bond to the remaining fibre content.

The fibres with the lowest softening temperatures and melting points will act as binders during heat application, while the fibres with the higher softening temperatures remain intact. The softening temperature differences between the various fibre types must normally be at least 10 °C for the said property to be utilized.

According to the invention the fibre structure may comprise fibres which are produced from a combination of two different fibre material types, the core of the individual fibres being constituted by one fibre material type, and the surface being constitued by a modified or other fibre material type.

The adhesive layer, which according to the invention comprises an organic, polymer-containing binder, may be an emulsion binder of an aqueous solution of polymer particles, or may be 100% thermoplastic binders also known as hot melt/powder adhesives. The binder may be chemically reactive and comprise polymers and/or copolymers of e.g. polystyrene butadiene, polyacrylate, polystyrene acrylate, polyvinylacetate, copolyamides, copolyesters or nitrile butadiene, and may further comprise a thermoplastic filler. In the case of a thermoplastic binder comprising polymers and/or copolymers of polyolefines, polyesters or polyamides, this may during the production be dispersed in a suspension to a paste, or may be used as it is. Presently preferred binders are SBR-latex and polyacrylic latex with a polyethylene filler.

In the case of emulsion binders they will by means of capillary transportation diffuse into the back of the primary backing layer of the semi-manufactured material, and further diffuse into the upper side of the fibre structure of the secondary backing layer, and during the succeeding heat application the binder is activated so as to achieve the fine retention. In particular when the surfaces of the fibre structure of the secondary backing layer are untreated and piled good penetration will be achieved and consequently good retention of the binder.

The materials in the secondary backing and the adhesive layer are preferably moisture-proof polymers. This is advantageous as the carpet during use will not change dimensions when exposed to humidity and heat fluctuations. The stability of the carpet covering is thus ensured, while the weight thereof remains relatively low. The low weight of the backing construction (binder and adhesive layer) and the fact that the carpet can be rolled up easily moreover result in new and advantageous possibilities with regard to the manufacture thereof.

According to the invention the stiffness and the material of the backing and the binder layer are chosen such that the thus formed carpet has a sufficient stability for application both as carpet tile and wall-to-wall carpet and a comparatively low weight and, after being formed, the carpet is wound onto so-called broadloom rollers and cut partially into carpet tiles.

A particularly strong adhesion between the semi-manufactured layer and the secondary backing layer is obtainable by establishing a stabilizing synergistic effect between the binder and the fibre structure of the secondary backing layer. Such synergistic effect may e.g. be provided by the fibre structure comprising fibres where the polymeres have mutually different softening temperatures, and where the binder reaction temperatures at least lie between the softening temperature and the melting temperature of the first-molten fibre polymer in the fibre structure. Hereby the binder, when penetrating into the surface of the fibre structure, will react and bond together with the said first molten fibres. Hereby both the fibre structure and the binder contribute to adhesion. Simultaneously a strength imparting stabilization of the carpet covering is achieved.

In addition to the said positive properties provided by the adhesives (precoat and binder) and the secondary backings of the invention in terms of the mechanical dimensional stability of the carpet, they are also of great importance to the dimensional stability of the carpet in terms of climatic changes.

One of the main problems in relation to climatic dimensional stability is that the semi-manufactured material e.g. comprising polyamide or wool "pile materials" even though constructed on dimensionally stable primary backings will shrink and extend due to changes in temperature and humidity.

Previously this problem regarding dimensional stability is solved by use of the glass fibre reinforcement layers or heavy backing layers of bitumen or PVC mentioned in the "Background of the Invention".

By the carpet construction according to the invention is on the contrary achieved a saturation of the stabilizing part of the carpet with moisture proof polymers. The saturation with these polymers is in all embodiments of the new carpet sufficient to prevent degradation of stability due to moisture penetration.

The good dimensional stability under climatic changes is obtained since the secondary backing consists of essentially non-moisture absorbent materials and the main part of the adhesive layer consists of essentially non-moisture absorbent polymers after bonding thereof. The saturation is obtained by the adhesive layer which penetrates into the backside of the semi-manufactured material and the secondary backing as previously described. The saturation of the carpet construction can be sufficient to build up a waterproof membrane or can be just sufficient to allow a certain air permeability through the carpet.

For contract applications the carpet will in practice primarily be based on thermoplastic and non-moisture absorbing materials in the adhesive and the secondary backing layer.

It appears from the above description that the same types of thermoplastic polymers are applicable as fibres and adhesives to a great extent. The person skilled in the art will be able to select the proper ingredients without undue experimentation in order to obtain the proper melting characteristics depending on whether e.g. a fibre, a hot melt adhesive or a thermoplastic filler for the adhesive is desired. Typically the exact formulation is chosen by the supplier in accordance with the specified properties.

According to the invention special environmental advantages are obtainable at disposal of the floor covering. When the entire floor covering construction, i.e. pile, primary backing layer, binder and back are made from organic polymers, the floor covering used can be incinerated by a controlled incineration with energy recovery. As mentioned above, it may be a case of pure thermoplastic polymers and copolymers of e.g. polyesters, polyamides, polyacrylates etc., and combinations thereof. In many countries, like in Denmark, use is made of incineration with energy recovery when disposing of waste, such as used carpet coverings.

According to the invention the possibility is also offered in a particularly advantageous way of melting down the used floor covering or treating it chemically so that afterwards it can be used in the production of new fibre floor coverings or other products. In this connection the entire floor covering construction comprising pile, primary backing layer, binder and secondary backing layer is to be produced from mutually re-cyclable compatible materials. Use can e.g. be made of 100% polyolefines (polyethylene/polypropylene), a 100% polyester based floor covering construction or a construction based on polyamides. It will be especially advantageous if the binder is constituted by 100% thermoplastic materials.

### BRIEF DESCRIPTION OF THE DRAWINGS

In the following the invention is explained in more detail, reference being made to the various embodiments and the drawings in which
- Fig. 1: shows a schematical section of the floor covering according to the invention where the primary backing layer comprises a woven material,
- Fig. 2: in the same way as in Fig. 1 shows another embodiment where the primary backing layer comprises a non-woven fibre structure,

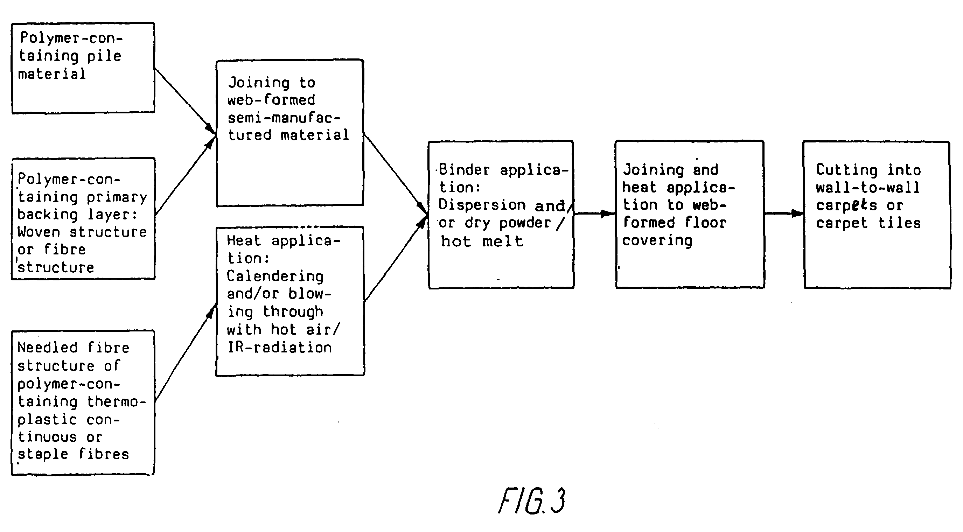

- Fig. 3: shows the process steps according to the invention for producing the floor covering,
- Fig. 4: shows a section through a part of a carpet tile according to the invention,
- Fig. 5: shows schematically an example of a method of manufacture according to the invention, and

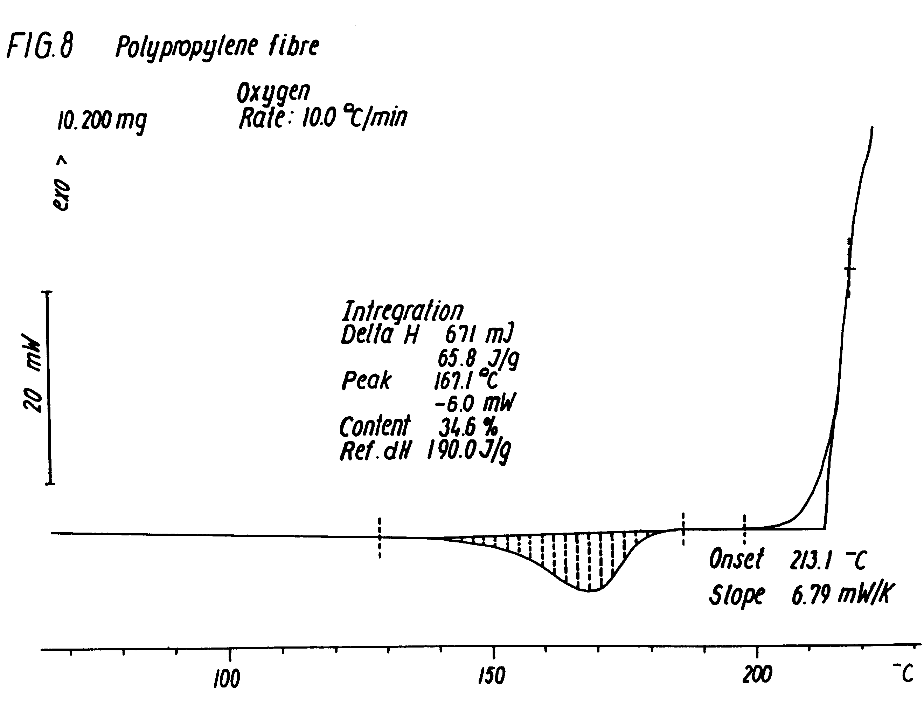

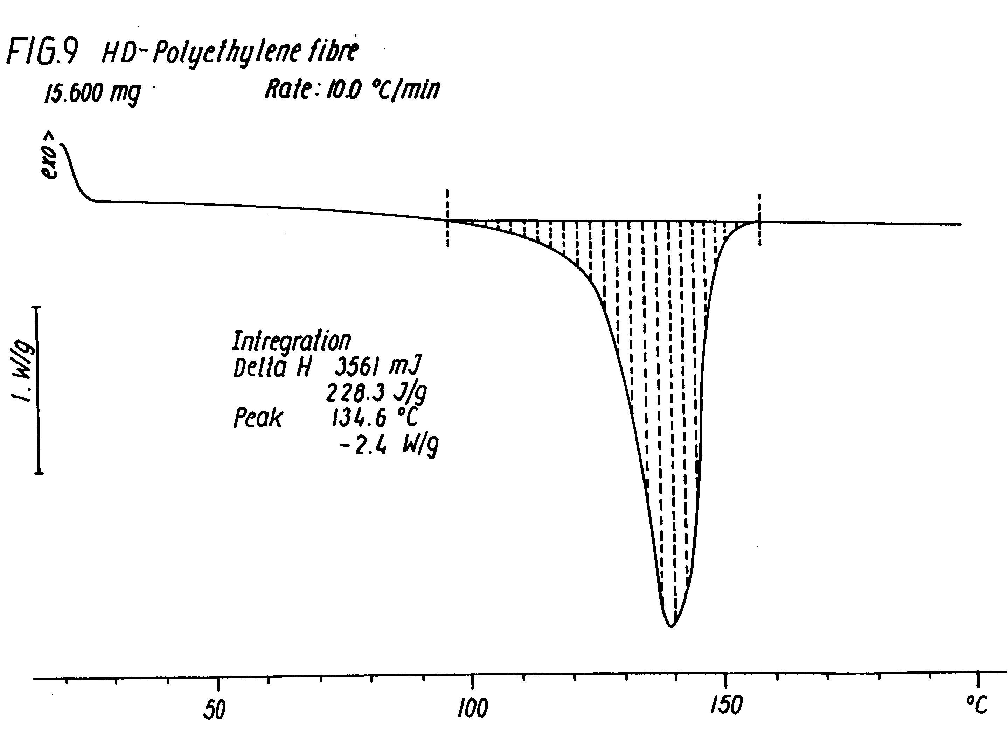

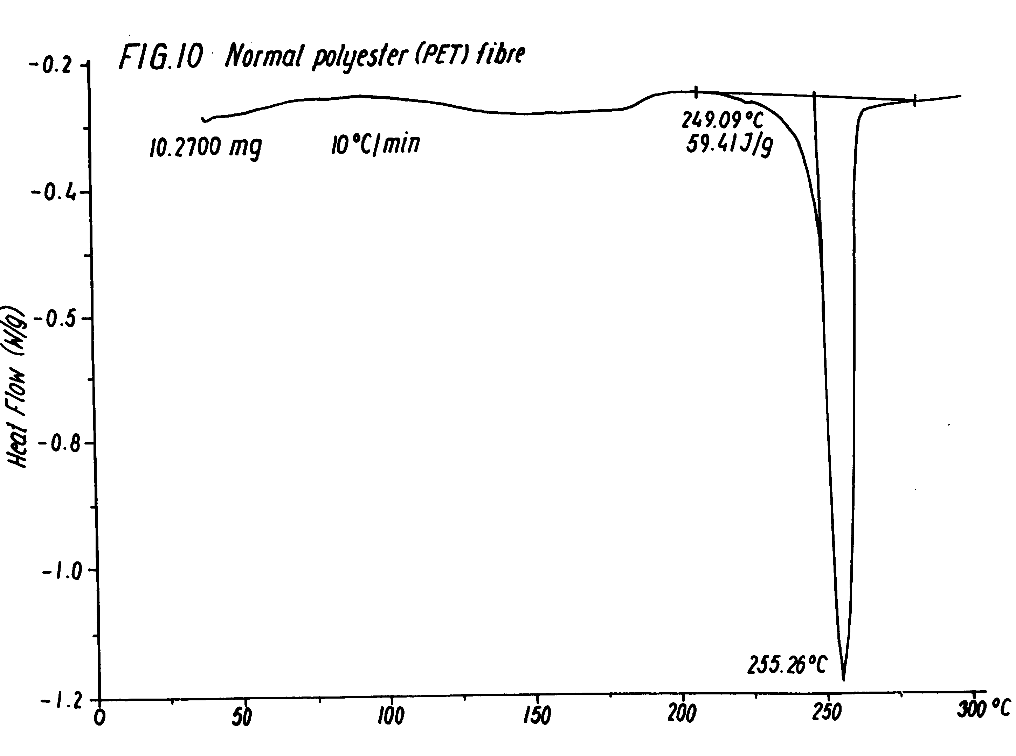

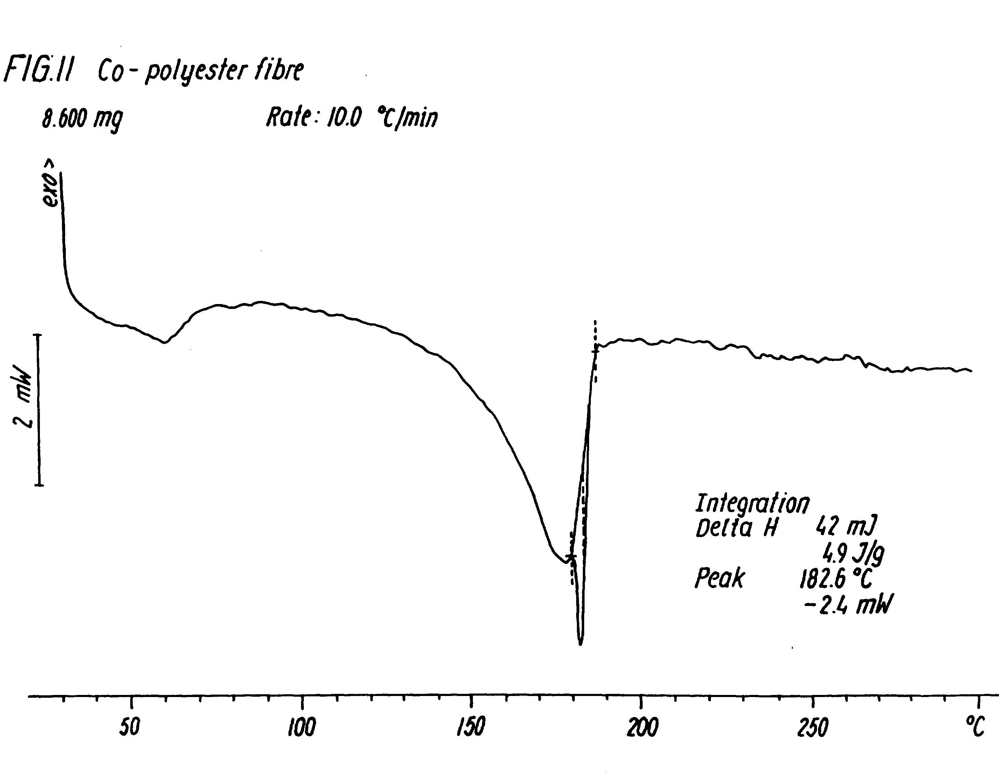

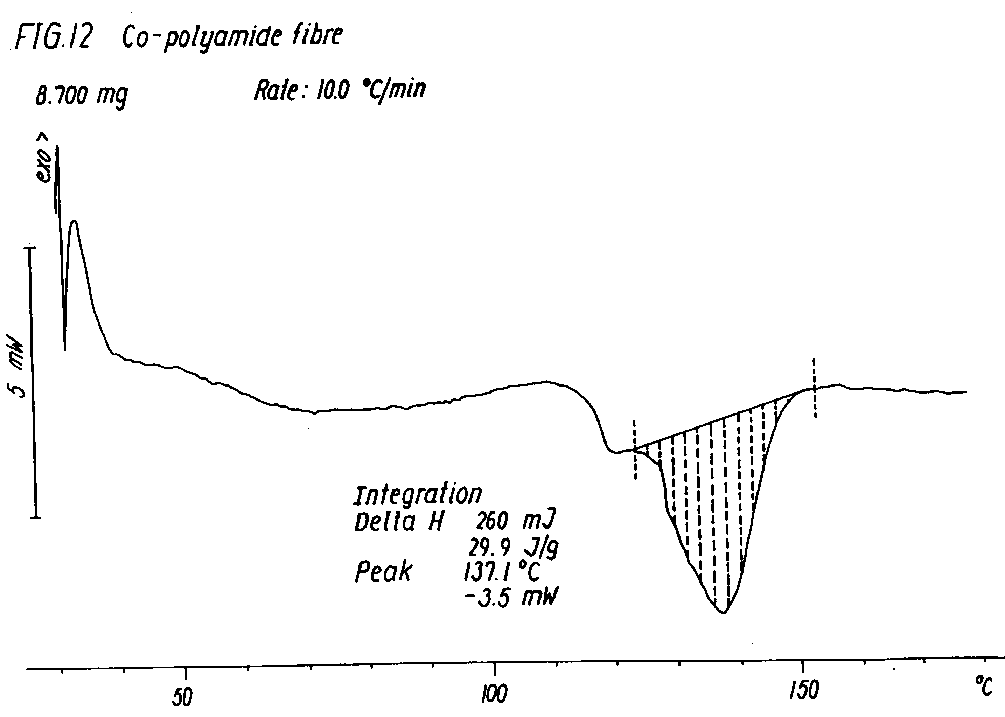

- Figs. 6-12: show Differential Scanning Calorimetry (DSC) curves for a representative selection of applicable polymer materials in the floor coverings according to the invention as further described below.

### DETAILED DESCRIPTION OF THE INVENTION

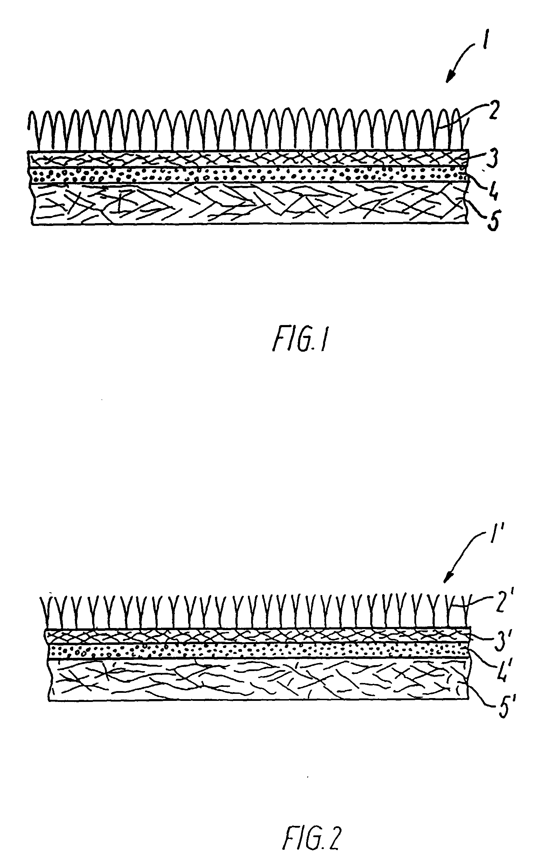

In case of the floor coverings 1 and 1' shown in figs. 1 and 2 a web-formed semi-manufactured material is produced in an initial production step, which material comprises polymer-containing pile material 2 and 2' being retained to a polymer-containing primary backing layer 3 and 3'. As mentioned in the introduction both the pile material and the primary backing layer may comprise both natural fibres and synthetic fibres, or mixtures thereof. In the embodiment shown in Fig. 1 the primary backing layer 3 is constituted by a woven primary backing layer, and the pile material is a looppile 2. In the-embodiment shown in Fig. 2 the primary backing layer 3' is constituted by a fibre structure e.g. a known spunbonded fibre structure, and the pile material is a cutpile 2'.

The web-formed semi-manufactured material 2, 3 or 2', 3' is joined with the underlying secondary backing layer 5, 5', respectively, by means of an interleafing adhesive layer 4, 4', respectively, and with simultaneous heat application to form the web-formed floor covering 1, 1', respectively, according to the invention. The web-formed floor covering is subsequently cut into wall-to-wall carpets or carpet tiles with the desired sizes.

The organic polymer-containing binder 4, 4', respectively, which is activated by a heat application, has a reaction temperature which is lower than the melting temperature for the majority of the fibre material content in the fibre structure. By the application of heat the binder is heated to a temperature in the interval 60-250 °C, the heat application of course depending on the reaction temperature of the binder, which is adapted to the melting temperature for the majority of the fibre material type in the fibre structure, as will be explained in the following.

As previously mentioned the emulsion binders may be in the form of polymeric particles in aqueous solution, the emulsion binders can be divided into the groups chemically reactive binders and thermoplastic binders. The chemically reactive emulsion binders may be based on base polymers and copolymers of polystyrene butadiene, polyacrylate, polystyrene acrylate, polyvinylacetate and nitrile butadiene. As regards the thermoplastic emulsion binders they are thermoplastics dispersed in suspension to form a paste. The thermoplastics may be based on polymers and copolymers of polyolefines, polyester, polyamides etc. This type of binder is especially used when it is desired to be able to re-cycle the floor covering and the materials in the composite construction. E.g. polyolefine-containing binder is used when the carpet construction contains polypropylene and/or polyethylene fibres.

The adhesives may also be present in the form of 100% pure thermoplastics based on polymers and copolymers of polyolefines, polyesters and polyamides. The thermoplastics are applied onto the semi-manufactured material and the fibre structure of the secondary backing layer in dry state. Use may be made of several different application and lamination methods, e.g. powder application or melt application (hot melt).

By the powder application the thermoplastic binder is applied in powder form between the web-formed semi-manufactured material and the web-formed secondary backing layer, whereafter the layers are pressed together under heat impact, so that the thermoplastic is activated, melts and adheres the two layers to form the finished web-formed floor covering material.

By melt application the thermoplastic binder is heated to a liquid mass which is positioned e.g. by extrusion between the web-formed semi-manufactured material and secondary backing layer which subsequently are pressed together e.g. between rollers. Under subsequent cooling the liquid binder hardens, and the two layers are retained fixedly together to the finished web-formed floor covering material.

The binders consisting of 100% thermoplastic materials are used particularly advantageously when the floor covering is composed of mutually compatible and consequently re-cyclable materials.

Furthermore, it is important to indicate that the adhesive layer can comprise several layers - laid on one by one. For example can a layer of polyacryllatex comprising a polyethylene filler be laid as a precoat layer whereafter a hotmelt layer or a powder adhesive layer of polyethylene can be laid as a secondary adhesive layer. Another example could be applying a hotmelt layer as a precoat with a lower viscosity than the preceding binder layers (hotmelt or powder layers).

In the following the composition of the secondary backing layer 5, 5', respectively, is explained.

A typical construction of the backing layer is a fibre structure having a weight of about 300 g/m², with 80% polypropylene fibres having a length of 60-100 mm in approx. 5-15dtex and 20% stretched out high density polyethylene fibres having a length of 60-100 mm in 7-20dtex. By blowing through the fibre structure with hot air of approx. 110-140 °C the non-stretched HDPE-fibres are softened, and contract additionally 30%. The polypropylene fibres are not influenced during the blowing through with hot air. The HDPE-fibres contract around and adhere to the PP-fibres which hereby are fixed and locked in the fibre structure. Hereafter the back of the fibre structure may be calendered. Hereby a fibre structure is created which possesses both vertical strengths and dimensional stability as well as horizontal stability.

In another typical embodiment of the secondary backing layer the fibre structure has a weight of 600 g/m² and comprises 100% polypropylene fibres. Here a broad molecular weight distribution in polypropylene is utilized - the shorter molecule chains are first softened and utilized for adhering together and fixation of the fibres.

The fine strength and dimensional stability properties of the secondary backing layer are thus achieved by the said inter-fixation of the fibres in the structure. The calendering of the back contributes to a homogeneous surface without loose-hanging fibre material. Hereby the finished floor covering material can be fixedly adhered to underlying floor or foundation by existing adhesion methods, such as double-adhering tape, tackifiers or glue. It is a further advantage of the homogeneous surface that the back visually has been imparted with an even textile-like surface which may contribute in making the finished floor covering more exclusive in connection with sale and marketing.

Embossing and printing on secondary backing can also be means to improve the visual appearance of the floor covering.

The installation of broadloom carpets having a construction according to the invention gives a number of advantages. The fact that the broadloom carpet of the invention has a dimensional stability similar to that of carpet tiles and that it has a homogenous surface makes it possible to install it by using tackifier as opposed to the technique applied to-day where broadloom carpets are glued down to the sub-floor by means of a permanent glue. The reason why permanent glue is used to-day is that broadloom carpets which contain chalk etc., shrink and extend due to changes in temperatures and humidity. If a tackifier is used on such a carpet, unstability and subsequently wrinkles may occur. If a tackifier is used in connection with installation of broadloom carpets according to the invention, major cost savings are achieved due to reduced binder quantity and the fact that the binder is easily removed after use. Thus problems in connection with removal of permanent glue, levelling and repair of sub-floors are avoided.

It should be mentioned that for such uses of floor covering which call for low electrical surface and transition resistance, e.g. lower than 10⁹ ohm the fibre structure may be admixed with easily conducting fibres, or be impregnated with an easily conducting liquid. By use of as much as 5% of either steel fibres or copper and nickel coated fibres, or by the said impregnation of the fibre structure by approx. 0.8% of an easily conducting liquid, the backing may be imparted with electrical surface-transition resistance down to 10⁶ ohm measured according to DIN 54345.

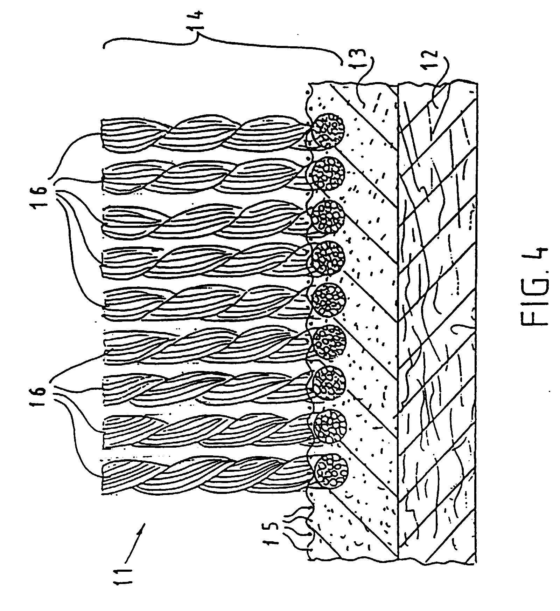

A carpet tile 11 (figure 4) comprises a secondary backing layer 12, a binder layer 13 and a top layer 14. The last-mentioned consists of a primary backing layer 15 and threads 16 stitched therein. Secondary backing layer 12 and binder layer 13 are relatively flexible and light and each comprise re-usable material, for example a re-usable polymer.

The re-usable polymer of the secondary backing layer 12 and/or binder layer 13 can be moisture-proof. The shape and dimension stability of tile 11 is hereby increased considerably, as the material of the secondary backing layer 12 and/or binder layer 13 can then absorb practically no moisture. Backing 12 can be manufactured for this purpose of for instance non-woven polypropylene, while as binder 13 can be used a mixture of latex and polyethylene. The exact mixing ratio of the binder components can be varied in order to obtain specific properties in specific carpet constructions. An exemplary mixture might e.g. contain 40% SBR latex and 60% polyethylene. To increase the stability of tile 11 a material is preferably used for the primary backing layer 15 which corresponds closely with secondary backing layer 12 in respect of its most important properties. A suitable choice in this case is a primary backing 15 of spun bonded polyester. The above materials not only result in a stable carpet tile 11 which is moreover to a very great extent reusable, whereby a significant reduction of the amount of waste for dumping or burning is already achieved, but they also result in a considerable reduction in the tile weight per se, whereby the amount of waste is reduced still further. Other combinations of materials and layer thicknesses are of course also conceivable with which a stable, easily processed and light tile 11 is obtained.

The specific weight of secondary backing layer 12 can for instance be in the order of 300 grams per square metre through use of the above described materials, while binder layer 13 can have a specific weight of for instance about 900 grams per square metre. Herewith the secondary backing 12 and binder layer 13 in this embodiment together represent between 35 and 70% of the total tile weight, since a typical top layer 14, which may have a thickness of several millimetres, will have a specific weight in the order of 500-2,000 grams per square metre (in the embodiment roughly 1,100 grams per square metre for the threads 16 and about 100 grams per square metre for the primary backing 15). The specific weight of the carpet tile 11 thus amounts in total to roughly 2.4 kilograms per square metre, therefore approximately half a conventional carpet tile. By selecting re-usable material for secondary backing 12 and/or binder layer 13, less than 200 grams per square metre of the original material remains for dumping after use and incineration.

Because the material of carpet tile 11 is relatively flexible and light it is simple to roll up. This makes it possible to wind the carpet onto broadloom rollers and suppply it either as broadloom carpets or as carpet tiles, whereby for instance a relatively little used part of a floor of a room area can be fitted with broadloam carpet, while a more intensively used part of the area, for instance a passageway, can be laid with identical carpet tiles which after a period of time can be easily replaced. Considerable savings are thus achieved in carpeting costs while the quantity of waste material is also greatly limited in this way.

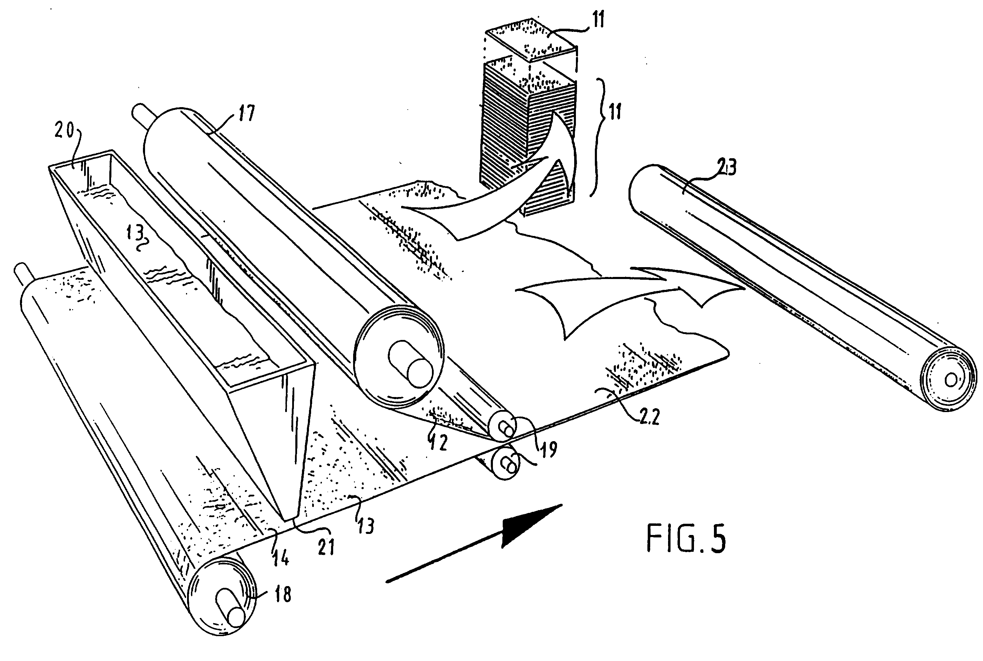

A method of manufacture wherein carpet is produced in these two forms is depicted schematically in figure 5. Herein the separately formed secondary backing 12 and top layer 14 wound onto rollers 17 and 18 respectively are pressed onto one another between two pressure rollers 19 after a layer of binder 13 has first been applied to the top layer 14 from a reservoir 20 with an outlet opening 21. The carpet 22 obtained between the pressure rollers 19, optionally after heating or drying, is finally wound onto broadloom rollers 23 and at a later stage optionally partly cut into carpet tiles 11. A producer can thus supply in simple and inexpensive manner two well matched products, i.e. broadloom carpet and identical carpet tiles cut therefrom.

In the following examples are given of specific constructions of the fibre structure of the secondary backing layer:

| 1.1 | |
|---|---|
| Weight: | 300 g/m² |
| Material: | 100% polypropylene (DSC curve fig. 8) |
| Fibre mixture: | 5/11/15dtex, 60/70/80/90 mm |
| Heat treatment: | Calendering on the back within the temperature interval 150-190 °C. |

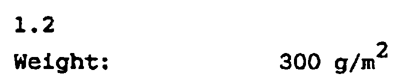

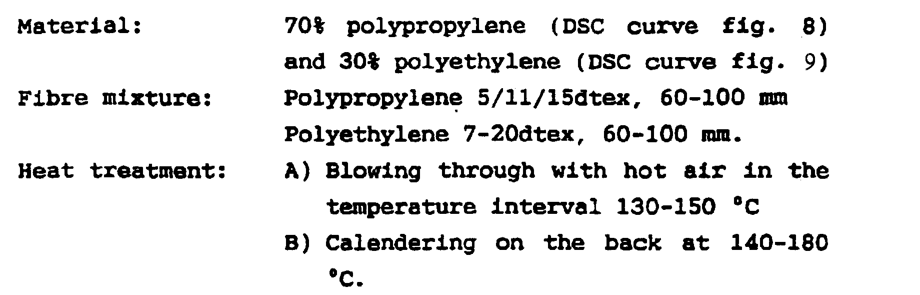

| 1.3 | |
|---|---|
| Weight: | 600 g/m² |
| Material: | 70% polyester (PET, DSC curve fig. 10) and 30% copolyester (DSC curve fig. 11) |
| Fibre mixture: | Polyester 7/15dtex, 60-80 mm Copolyester 6,7dtex, 60-80 mm |
| Heat treatment: | A) Blowing through with hot air in the temperature interval 150-230 °C. B) Calendering on the back at 200-260 °C. |

| 1.4 | |
|---|---|
| Weight: | 600 g/m² |
| Material: | 70% polyamide 6 and 20% copolyamide (DSC curve fig. 12) |
| Fibre mixture: | Polyamide 6 5/11/15dtex, 60/80 mm Copolyamide 4,2/11dtex, 50/80 mm |
| Heat treatment: | IR-radiation in the temperature interval 120-220 °C. |

In the following examples are given of expedient embodiments of the floor covering according to the invention:

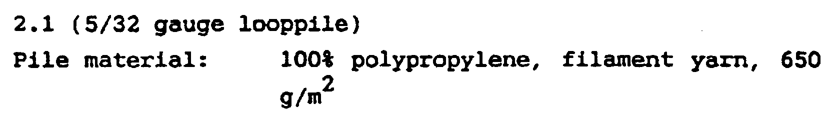

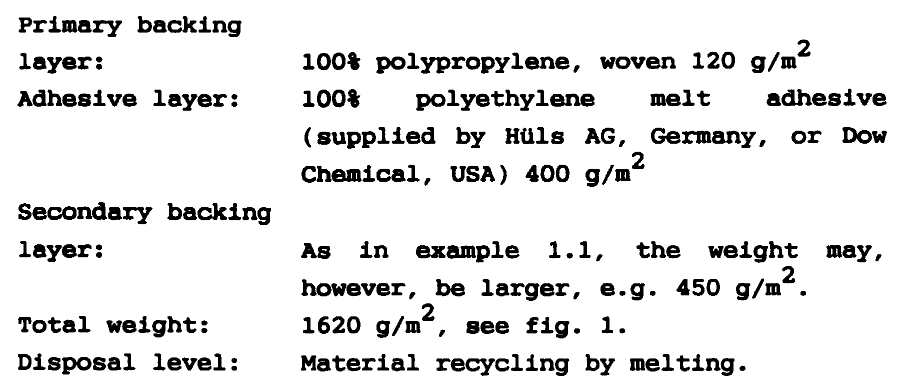

| 2.2 (1/8 gauge cutpile) | |
|---|---|
| Pile material: | 100% polyester spun yarn 800 g/m² |
| Primary backing | |
| layer: | 100% polyester spunbonded 120 g/m² |
| Adhesive layer: | 100% copolyester melt adhesive (supplied by Ems Chemie, Domat-Ems, Switzerland, under the trade name Griltex 11) 400 g/m² |

| Secondary backing | |
|---|---|
| layer: | 100% polyester 500 g/m² |
| Total weight: | 1820 g/m², see fig. 2. |
| Disposal level: | Partial material recycling by melting and chemical treatment. |

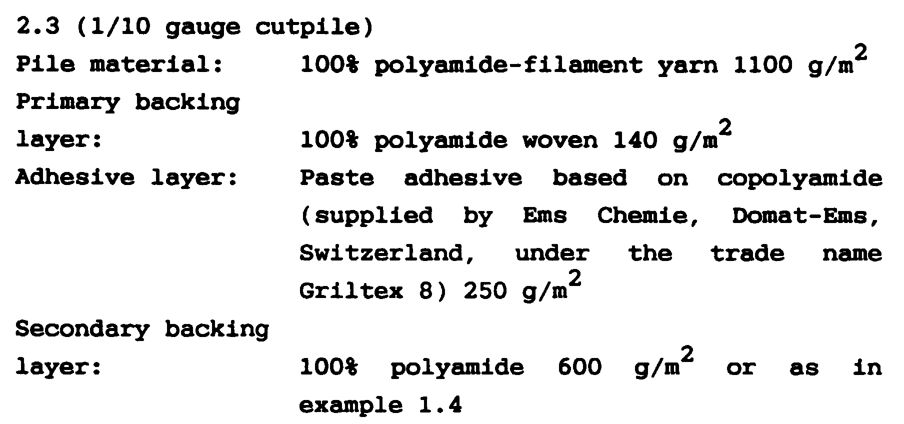

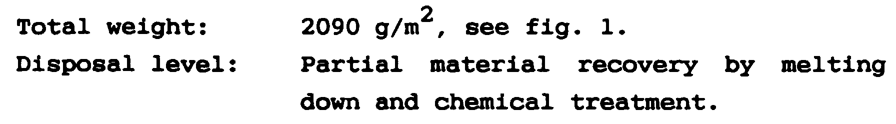

| 2.4 (1/4 gauge looppile) | |
|---|---|
| Pile material: | 100% polyamide-filament yarn 1000 g/m² |

| Primary backing | |
|---|---|
| layer: | 100% polypropylene woven 120 g/m² |
| Adhesive layer: | Modified pre-coat 800 g/m² and modified binder 480 g/m² based on carboxylated styrene acrylate copolymer with polyethylene filler (supplied by Dow Benelux, Tessenderlo, Belgium) |

| Secondary backing | |
|---|---|
| layer: | As in example 1.1 |
| Total weight: | 2700 g/m², see fig. 1. |
| Disposal level: | Energy recovery by incineration. |

| 2.5 (1/10 gauge cutpile) | |
|---|---|
| Pile material: | 100% wool, 1100 g/m² |

| Primary backing | |
|---|---|
| layer: | 100% polypropylene woven 120 g/m² |
| Adhesive layer: | Modified pre-coat 750 g/m² and modified binder 450 g/m² based on carboxylated styrene butadiene copolymer with polyethylene filler (supplied by Dow Benelux, Tessenderlo, Belgium) |

| Secondary backing | |
|---|---|
| layer: | As in example 1.1 |
| Total weight: | 2720 g/m², see fig. 1. |
| Disposal level: | Energy recovery by incineration. |

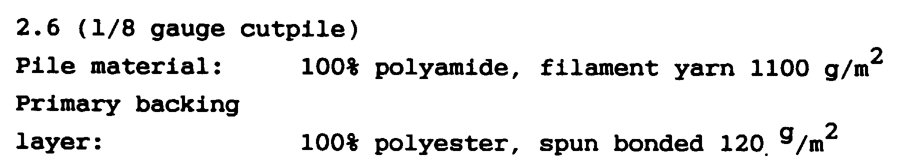

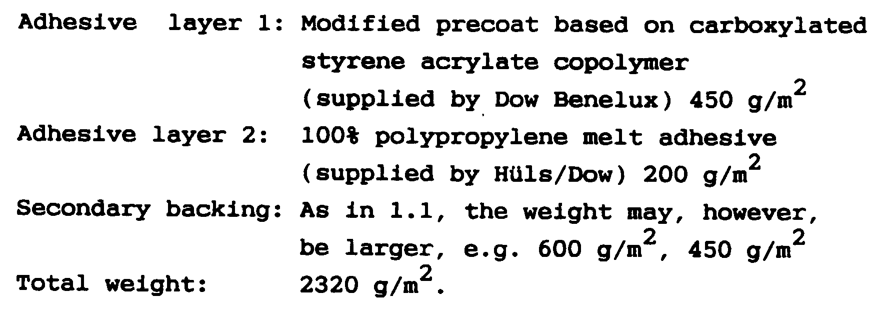

| 2.7 (5/32 gauge looppile) | |
|---|---|
| Pile material: | 100% polypropylene, filament yarn 600 g/m² |
| Primary backing: | 100% polypropylene, woven 100 g/m² |
| Adhesive layer 1: | Modified precoat based on carboxylated styrene acrylate copolymer, polyethylene as filler (supplied by Dow Benelux) 400 g/m² |
| Adhesive layer 2: | 100% polyethylene melt adhesive (supplied by Hüls/Dow) 200 g/m² |
| Secondary backing: | As in 1.1, the weight may, however, be larger, e.g. 450 g/m², 300 g/m |
| Total weight: | 1600 g/m². |

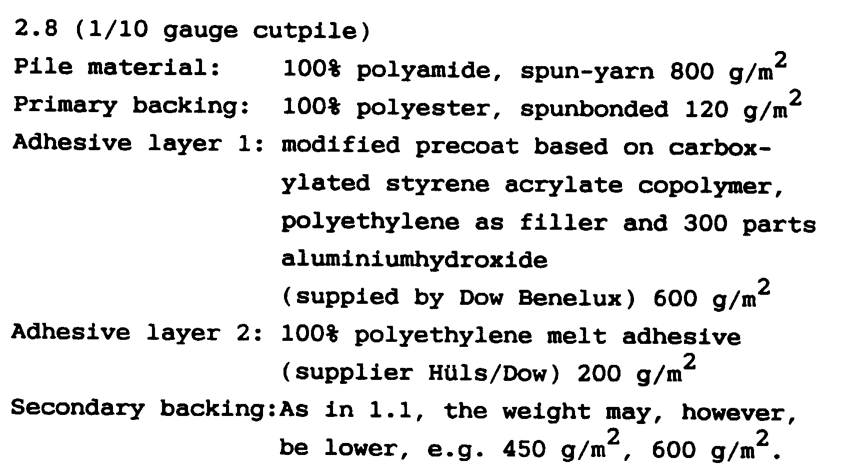

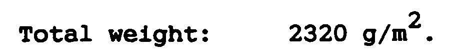

| 2.9 (1/8 gauge cross over cut) | |
|---|---|
| Pile material: | 100% polyamide, filament yarn, 1000 g/m² |
| Primary backing: | 100% polyester, spunbonded 120 g/m² |
| Adhesive layer 1: | Modified precoat based on carboxylated styrene acrylate copolymer, polyethylene as filler and 200 parts aluminiumhydroxide (supplied by Dow Benelux) 600 g/m² |
| Adhesive layer 2: | 100% polyethylene powder adhesive (supplied by Hüls/Dow), 200 g/m² |
| Secondary backing: | As in 1.1 the weight may, however, be lower, e.g. 300 g/m², 450 g/m². |
| Total weight: | 2370 g/m². |

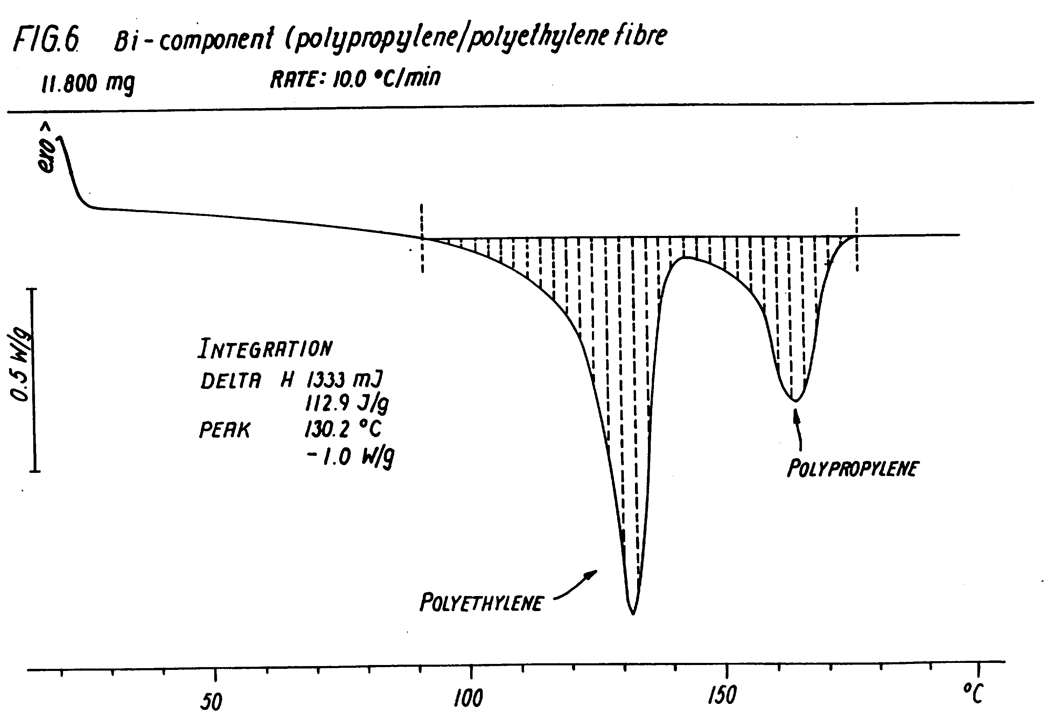

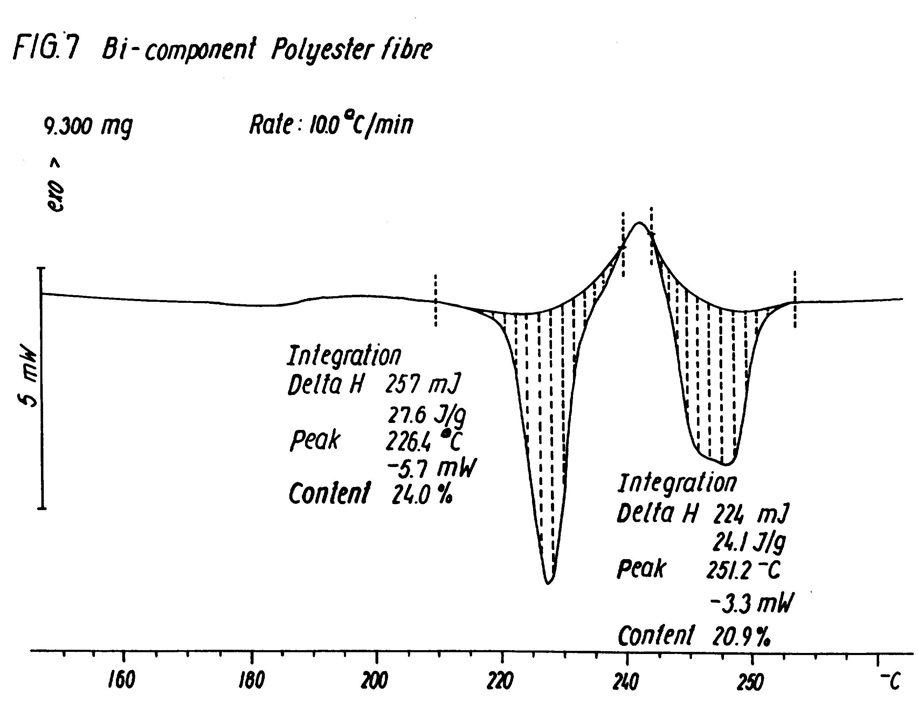

As previously mentioned the fibre structure can advantageously be made from a combination of two different fibre material types, where the core of the individual fibres is constituted by one fibre material type, and a surface is constituted by another fibre material type (bi-component fibres). E.g. fibres with polypropylene core and with a polyethylene surface may be used. DSC-curve for a typical fibre of this type is shown on fig. 6. Use may also be made of polyester fibres with polyester core having a melting point of about 256 °C and with polyester having a melting point of about 225 °C, DSC-curve for a typical fibre of this type is shown on fig. 7, or with another polyester composition having a melting point e.g. of 140 °C.

Testing of samples of floor covering embodiments according to the examples 2.1-2.9 has been carried out and compared with conventional bitumen tiles by the Danish Technological Institute according to ISO 34551/1-1981(E) with a view to determining residual ash percentage at total incineration at 600 °C. A representative example of the results are shown in Table A.

**TABLE A**

| Ash, percentage by mass of the Conventional bitumen carpet tile | | |
|---|---|---|
| Test no. | Total sample, incl. pile and under part | Under part of the sample *) |
| 1 | 45.9 | 65.2 |
| 2 | 44.3 | 65.8 |
| Mean values | 45.1 | 65.6 |
| Mass of test specimen | approx. 4.5 g | approx. 3.0 g |
| | | |

| Ash, percentage by mass of the New Development | | |
|---|---|---|
| Test no. | Total sample, incl. pile and under part | Under part of the sample *) |
| 1 | 0.9 | 1.0 |
| 2 | 0.9 | 1.0 |
| Mean values | 0.9 | 1.0 |
| Mass of test specimen | approx. 1.8 g | approx. 0.4 |

| | | |
|---|---|---|
| *) The pile was separated from the under part of the adhesive layer. | | |

Many different material combination may be used in the composite layers of the floor covering as long as the secondary backing layer comprises a needled fibre structure of thermoplastic polymer-containing fibres being inter-fixated by heating, and as long as the adhesive layer comprises a polymer-containing binder which is activated by heat application.

## Claims

1. A low-stretch floor covering material (1) applicable both as wall-to-wall (broadloom) carpets and as carpet tiles, said material exhibiting both a dimensional stability under climatic changes and the ability to be wound onto broadloom rollers, the floor covering material (1) comprising
a primary backing layer (3)
a pile material (2) retained to said primary backing layer (3) so as to form a top layer (2,3), and
an underlying secondary backing layer (5) comprising a needled fibre structure of essentially non-moisture absorbing thermoplastic, polymer-containing continuous or staple fibres which are inter-fixated by heating to a temperature at least corresponding to the lowest softening temperature for the fibre materials in the fibre structure,
said secondary backing layer (5) being retained to the back of said primary backing layer (3) by means of an intermediate adhesive layer (4) comprising an organic, polymer-containing binder which can be activated by heat application and has a reaction temperature which is lower than the melting temperature for the majority of the fibre material content in the fibre structure, said binder being essentially non-moisture absorbing after bonding thereof,
wherein the secondary backing layer (5) has a specific weight of 70-1000 g/m².

2. A floor covering material according to claim 1,
wherein the secondary backing layer has a specific weight of 100-600 g/m², preferably 300-600 g/m².

3. A floor covering material according to claim 1,
wherein the thermoplastic fibre materials are selected from the group consisting of polymers and copolymers based on polyolefines, preferably polypropylene and polyethylene; polyesters, polyamides and polyacrylates, and combinations hereof.

4. A floor covering materal according to claim 1,
wherein the thermoplastic, fibre materials comprise at least two different fibre material types having a softening temperature difference of at least 10 °C between the fibre material type with the lowest softening temperature and the fibre material type with the second lowest softening temperature.

5. A floor covering material according to claim 1,
wherein the fibre structure comprises thermoplastic fibres which are produced by a combination of two different fibre material types (bi-component fibre), the cores of the individual fibres being constituted by one fibre material type, and the surface being constituted by another fibre material type.

6. A floor covering material according to claim 1,
wherein the binder of the adhesive layer (4) is an emulsion binder which is constituted by an aqueous solution of polymeric particles.

7. A floor covering material according to claim 6,
wherein the binder is chemically reactive and comprises polymers and/or copolymers of either polystyrene butadiene, polyacrylate, polystyrene acrylate, polyvinylacetate or nitrile butadiene.

8. A floor covering material according to claim 7,
wherein the chemically reactive binder further comprises a thermoplastic filler.

9. A floor covering material according to claim 6,
wherein the binder of the adhesive layer (4) comprises thermoplastics dispersed in a suspension so as to form a paste.

10. A floor covering material according to claim 1,
wherein the binder of the adhesive layer (4) is a thermoplastic powder adhesive, or a thermoplastic hot melt adhesive.

11. A floor covering material according to one or more of the claims 8-10, wherein the thermoplastics comprise polymers and/or copolymers of either polyolefines, polyester or polyamides.

12. A floor covering material according to claim 1,
wherein the intermediate adhesive layer (4) comprises both a first adhesive layer (precoat layer) for improving the retention of the pile material(s) to the primary backing layer (3) and a secondary adhesive layer (binder layer) for securing the retention of the secondary backing layer (5) to the primary backing layer (3).

13. A floor covering material according to claim 12,
wherein the precoat layer comprises an aqueous emulsion binder optionally comprising a thermoplastic filler.

14. A floor covering material according to claim 12,
wherein the binder is a polyacrylic latex, an SBR-latex or styrene acrylate latex optionally comprising a polyethylene filler.

15. A floor covering material according to claim 12,
wherein the secondary adhesive layer comprises a melt adhesive, preferably a polypropylene, polyethylene or copolyester melt adhesive.

16. A floor covering material according to claim 12,
wherein the secondary adhesive layer comprises a thermoplastic powder adhesive, preferably a polyethylene powder adhesive.

17. A floor covering material according to claim 12,
wherein the secondary adhesive layer comprises an aqueous emulsion binder, preferably a carboxylated styrene butadiene copolymer latex comprising a polyethylene filler.

18. A floor covering material according to claim 1 wherein at least the secondary backing layer (5) and/or the adhesive layer (4) comprise a substantially re-usable material.

19. A floor covering material according to claim 18,
wherein the re-usable material is a polymer.

20. A floor covering material according to claim 18 or 19, wherein the re-usable material is moisture-proof.

21. A floor covering material according to any of the preceding claims, wherein the secondary backing layer (5) comprises polypropylene and the adhesive layer (4) polyethylene.

22. A floor covering material according to any of the preceding claims, wherein the top layer (2,3) consists of a primary backing layer (3) and threads stitched therein (2) and the primary backing layer (3) and the secondary backing layer (5) are each formed by a non-woven sheet.

23. A floor covering material according to claim 22, wherein the primary backing layer (3) comprises a polyester.

24. A method of producing a floor covering material (1) according to claim 1, comprising the steps of
initially producing a web-formed semi-manufactured material comprising a pile material (2) retained to a primary backing layer (3),
heating a web-formed secondary backing layer (5) having a specific weight of 70-1000 g/m² and comprising a needled fibre structure of essentially non-moisture absorbing thermoplastic, polymer-containing continuous or staple fibres to a temperature at least corresponding to the lowest softening temperature for the fibre materials in the fibre structure so as to provide an interfixation of the fibres,
joining the back side of the web-formed semi-manufactured material (2,3) with the web-formed backing layer (5) by interleafing an adhesive layer (4), said adhesive layer comprising an organic polymer-containing binder having a reaction temperature which is lower than the melting temperature for the majority of the fibre material content in the fibre structure and activating the binder by heat application so as to provide an essentially non-moisture absorbing bonded adhesive layer (4),
winding the material (1) onto broadloom rollers and optionally cutting the material wholly or partially into carpet tiles.

25. A method according to claim 24, wherein the web-formed secondary backing layer (5) is heated by calandering to a temperature essentially within the interval from 110 °C to 260 °C.

26. A method according to claim 24, wherein the web-formed secondary backing layer (5) is heated by blowing through hot air to a temperature essentially within the interval from 110 °C to 260 °C.

27. A method according to claim 24, wherein the web-formed secondary backing layer (5) is heated by infra-red radiation to a temperature essentially within the interval from 100 °C to 260 °C.

28. A method according to claim 24, wherein the intermediate adhesive layer comprises a pre-application of the binder on the back side of the web-formed semi-manufactured top layer (2,3) or on the upper side of the secondary backing layer (5), prior to joining thereof.

29. A method according to claim 24, wherein the intermediate adhesive layer (4) comprises a first adhesive layer (precoat layer) and a second adhesive layer (binder layer), said first precoat layer being first applied to the back side of the top layer (2,3) whereafter the second adhesive layer is applied to the secondary backing layer prior to joining thereof.

30. A method according to claim 24 further comprising cutting the finished produced web-formed floor covering material (1) at least crosswise of the direction of advance to form floor covering pieces in the desired size, e.g. for use as carpet tiles.

31. A method according to claim 24 for manufacturing a floor covering material (1) by forming a top layer (2,3) comprising a primary backing layer (3), forming a secondary backing layer (5) and bringing them together and, by interleafing a binder layer (4), mutually joining the top layer (2,3) and the secondary backing layer (5), wherein the stiffness and the material of the secondary backing layer (5) and the binder layer (4) are chosen such that the thus formed floor covering material has a sufficient dimension stability under climatic changes for application as carpet tile and a comparatively low weight and, after being formed, the floor covering material is wound onto so-called broadloom rollers and cut partially into carpet tiles.

32. Installation of a floor covering material according to claims 1-23 or as manufactured by the method according to claims 24-31 to an underlying floor by use of tackifier.

## Patentansprüche

1. Wenig dehnbares Fußboden-Bedeckungsmaterial (1), anwendbar sowohl als von Wand-zu-Wand-(Breitstuhl)-Teppich als auch als Teppichfliese, wobei das Material sowohl Maßbeständigkeit unter klimatischen Veränderungen als auch Aufrollbarkeit auf Breitstuhlwalzen zeigt, wobei das Fußboden-Bedeckungsmaterial (1) umfaßt:
Primärrückenschicht (3)
Flormaterial (2), das an der Primärrückenschicht (3) befestigt ist, um eine Oberschicht (2, 3) zu bilden, und
darunterliegende Sekundärrückenschicht (5), umfassend eine Nadelfaserstruktur aus im wesentlichen nicht Feuchtigkeits-absorbierenden, Thermoplast-haltigen Endlosoder Stapelfasern, die durch Erhitzung auf eine Temperatur dazwischen fixiert sind, die zumindest der niedrigsten Erweichungstemperatur der Fasermaterialien in der Faserstruktur entspricht,
wobei die Sekundärrückenschicht (5) an der Unterseite der Primärrückenschicht (3) mittels einer dazwischenliegenden Haftschicht (4) befestigt ist, umfassend ein organisches polymerhaltiges Bindemittel, welches durch Wärmeeinwirkung aktiviert werden kann und eine Reaktionstemperatur aufweist, die niedriger als die Schmelztemperatur des Großteils des Fasermaterialgehalts in der Faserstruktur ist, wobei das Bindemittel nach seiner Bindung praktisch nicht Feuchtigkeits-absorbierend ist,
wobei die Sekundärrückenschicht (5) ein spezifisches Gewicht von 70-1000 g/m² besitzt.

2. Fußboden-Bedeckungsmaterial nach Anspruch 1, wobei die Sekundärrückenschicht ein spezifisches Gewicht von 100-600 g/m², vorzugsweise von 300-600 g/m², besitzt.

3. Fußboden-Bedeckungsmaterial nach Anspruch 1, wobei die thermoplastischen Fasermaterialien gewählt werden aus der Gruppe, bestehend aus Polymeren und Copolymeren auf der Basis von Polyolefinen, vorzugsweise Polypropylen und Polyethylen; Polyestern, Polyamiden und Polyacrylaten, und Kombination von diesen.

4. Fußboden-Bedeckungsmaterial nach Anspruch 1, wobei die thermoplastischen Fasermaterialien mindestens zwei verschiedene Fasermaterialarten mit einem Erweichungstemperatur-Unterschied von mindestens 10°C zwischen der Fasermaterialart mit der niedrigsten Erweichungstemperatur und der Fasermaterialart mit der zweitniedrigsten Erweichungstemperatur umfassen.

5. Fußboden-Bedeckungsmaterial nach Anspruch 1, wobei die Faserstruktur thermoplastische Fasern umfaßt, die durch Kombination zweier verschiedener Fasermaterialarten (Zweikomponenten-Faser) hergestellt werden, wobei die Kerne der einzelnen Fasern in einer Fasermaterialart bestehen und die Oberflächen in einer anderen Fasermaterialart bestehen.

6. Fußboden-Bedeckungsmaterial nach Anspruch 1, wobei das Bindemittel der Haftschicht (4) eine Bindemittelemulsion ist, die in einer wässrigen Lösung polymerer Teilchen besteht.

7. Fußboden-Bedeckungsmaterial nach Anspruch 6, wobei das Bindemittel chemisch reaktiv ist und Polymere und/oder Copolymere von entweder Polystyrolbutadien, Polyacrylat, Polystyrolacrylat, Polyvinylacetat oder Nitrilbutadien umfaßt.

8. Fußboden-Bedeckungsmaterial nach Anspruch 7, wobei das chemisch reaktive Bindemittel ferner einen> thermoplastischen Füllstoff umfaßt.

9. Fußboden-Bedeckungsmaterial nach Anspruch 6, wobei das Bindemittel der Haftschicht (4) in einer Suspension dispergierte Thermoplaste umfaßt, um eine Paste zu erhalten.

10. Fußboden-Bedeckungsmaterial nach Anspruch 1, wobei das Bindemittel der Haftschicht (4) ein thermoplastisches Klebstoffpulver oder ein thermoplastischer Schmelzkleber ist.

11. Fußboden-Bedeckungsmaterial nach einem oder mehreren der Ansprüche 8-10, wobei die Thermoplaste Polymere und/oder Copolymere von entweder Polyolefinen, Polyester oder Polyamiden umfassen.

12. Fußboden-Bedeckungsmaterial nach Anspruch 1, wobei die dazwischenliegende Haftschicht (4) sowohl eine erste Haftschicht (Vorbeschichtung) zur Verbesserung der Befestigung des/der Flormaterial(ien) an die Primärrückenschicht (3) als auch eine zweite Haftschicht (Bindemittelschicht) zur Gewährleistung der Befestigung der Sekundärrückenschicht (5) an der Primärrückenschicht (3) umfaßt.

13. Fußboden-Bedeckungsmaterial nach Anspruch 12, wobei die Vorbeschichtung eine wässrige Bindemittelemulsion umfaßt, die wahlweise einen thermoplastischen Füllstoff enthält.

14. Fußboden-Bedeckungsmaterial nach Anspruch 12, wobei das Bindemittel ein Polyacryl-Latex, ein SBR-Latex oder ein Styrolacrylat-Latex ist, der wahlweise einen Polyethylen -Füllstoff enthält.

15. Fußboden-Bedeckungsmaterial nach Anspruch 12, wobei die zweite Haftschicht einen Schmelzkleber, vorzugsweise einen Polypropylen-, Polyethylen- oder Copolyester -Schmelzkleber, umfaßt.

16. Fußboden-Bedeckungsmaterial nach Anspruch 12, wobei die zweite Haftschicht ein thermoplastisches Klebstoffpulver, vorzugsweise ein Polyethylen-Klebstoffpulver, umfaßt.

17. Fußboden-Bedeckungsmaterial nach Anspruch 12, wobei die zweite Haftschicht eine wässrige Bindemittelemulsion umfaßt, die vorzugsweise in einem carboxylierten Styrolbutadien-Copolymer-Latex besteht, der einen Polyethylen-Füllstoff enthält.

18. Fußboden-Bedeckungsmaterial nach Anspruch 1, wobei zumindest die Sekundärrückenschicht (5) und/oder die - Haftschicht (4) ein im wesentlichen wiederverwendbares Material umfaßt.

19. Fußboden-Bedeckungsmaterial nach Anspruch 18, wobei das wiederverwendbare Material ein Polymer ist.

20. Fußboden-Bedeckungsmaterial nach Anspruch 18 oder 19, wobei das wiederverwendbare Material feuchtigkeitsundurchlässig ist.

21. Fußboden-Bedeckungsmaterial nach einem der vorangegangenen Ansprüche, wobei die Sekundärrückenschicht (5) Polypropylen und die Haftschicht (4) Polyethylen umfaßt.

22. Fußboden-Bedeckungsmaterial nach einem der vorangegangenen Ansprüche, wobei die Oberschicht (2,3) aus einer Primärrückenschicht (3) und darein gesteppten Fäden (2) besteht und die Primärrückenschicht (3) und die Sekundärrückenschicht (5) jeweils aus einem Vliesstoff hergestellt sind.

23. Fußboden-Bedeckungsmaterial nach Anspruch 22, wobei die Primärrückenschicht (3) ein Polyester umfaßt.

24. Verfahren zur Herstellung eines Fußboden-Bedeckungsmaterials (1) nach Anspruch 1, umfassend die folgenden Schritte
zunächst Herstellen eines aus einem Gewebe hergestellten, halbgefertigten Materials, umfassend ein Flormaterial (2), das an einer Primärrückenschicht (3) befestigt ist,
Erhitzen einer aus einem Gewebe hergestellten Sekundärrückenschicht (5) mit einem spezifischen Gewicht von 70-1000 g/m² und umfassend eine Nadelfaserstruktur aus im wesentlichen nicht Feuchtigkeits-absorbierenden, Thermoplast-haltigen Endlos- oder Stapelfasern auf eine Temperatur, die zumindest der niedrigsten Erweichungstemperatur der Fasermaterialien in der Faserstruktur entspricht, um eine Zwischenfixierung der Fasern zu schaffen
Zusammenfügen der Rückseite des aus einem Gewebe hergestellten, halbgefertigten Materials (2,3) mit der aus einem Gewebe hergestellten Rückenschicht (5) durch Zwischenlegen einer Haftschicht (4), wobei die Haftschicht ein organisches polymerhaltiges Bindemittel mit einer Reaktionstemperatur umfaßt, die niedriger als die Schmelztemperatur des Großteils des Fasermaterialgehalts in der Faserstruktur ist, und Aktivieren des Bindemittels durch Wärmeeinwirkung, um eine im wesentlichen nicht Feuchtigkeits-absorbierende gebundene Haftschicht (4) bereitzustellen,
Aufrollen des Materials (1) auf Breitstuhlwalzen und wahlweise Schneiden des gesamten oder eines Teils des Materials zu Teppichfliesen.

25. Verfahren nach Anspruch 24, wobei die aus einem Gewebe hergestellte Sekundärrückenschicht (5) durch Kalandern auf eine Temperatur im wesentlichen innerhalb des Bereichs von 110°C bis 260°C erhitzt wird.

26. Verfahren nach Anspruch 24, wobei die aus einem Gewebe hergestellte-Sekundärrückenschicht (5) durch Durchblasen von Heißluft auf eine Temperatur im wesentlichen innerhalb des Bereichs von 110°C bis 260°C erhitzt wird.

27. Verfahren nach Anspruch 24, wobei die aus einem Gewebe hergestellte Sekundärrückenschicht (5) durch infrarot-Strahlung auf eine Temperatur im wesentlichen innerhalb des Bereichs von 100°C bis 260°C erhitzt wird.

28. Verfahren nach Anspruch 24, wobei die dazwischenliegende Haftschicht einen Vorauftrag des Bindemittels auf die Unterseite der aus einem Gewebe hergestellten, halbgefertigten Oberschicht (2,3) oder auf die Oberseite der Sekundärrückenschicht (5) umfaßt, bevor diese zusammengefügt werden.

29. Verfahren nach Anspruch 24, wobei die Haftschicht (4) eine erste Haftschicht (Vorbeschichtung) und eine zweite Haftschicht (Bindemittelschicht) umfaßt, wobei die erste Vorbeschichtung zuerst auf die Unterseite der Oberschicht (2,3) und dann die zweite Haftschicht auf die Sekundärrückenschicht aufgetragen wird, bevor diese zusammengefügt werden.

30. Verfahren nach Anspruch 24, welches darüber hinaus das Schneiden des fertigproduzierten, aus einem Gewebe hergestellten Fußboden-Bedeckungsmaterials (1) zumindest quer zur Laufrichtung umfaßt, um Fußboden-Bedeckungsstücke in der gewünschten Größe, z.B. zur Verwendung als Teppichfliesen, zu erhalten.

31. Verfahren nach Anspruch 24 zur Herstellung eines Fußboden-Bedeckungsmaterials (1) durch Herstellen einer Oberschicht (2,3), umfassend eine Primärrückenschicht (3), Herstellen einer Sekundärrückenschicht (5) und Zusammenfügen der beiden, und durch Einlegen einer Bindemittelschicht, Zusammenbringen der Oberschicht (2,3) und der Sekundärrückenschicht (5), wobei die Steifigkeit und das Material der Sekundärrückenschicht (5) und der Bindemittelschicht (4) so gewählt werden, daß das derart hergestellte Fußboden-Bedeckungsmaterial eine ausreichende Maßbeständigkeit unter klimatischen Veränderungen zur Anwendung als Teppichfliese und ein vergleichsweise geringes Gewicht aufweist, und auf den Herstellschritt hin, Aufrollen des Fußboden-Bedeckungsmaterials auf sogenannte Breitstuhlwalzen und teilweises Schneiden zu Teppichfliesen.

32. Verlegung eines Fußboden-Bedeckungsmaterials nach Ansprüchen 1-23 oder wie mittels des Verfahrens nach Ansprüchen 24-31 hergestellt, auf einen Untergrund unter Verwendung eines Klebrigmachers.

## Revendications

1. Moquette (1) de faible élasticité applicable à la fois comme tapis plain (métier large) et comme dalles de tapis, ladite moquette ayant une stabilité dimensionnelle dans le cas de variations climatiques et la capacité d'être enroulée en rouleaux de métier large, ladite moquette (1) comprenant :
une couche dorsale primaire (3),
une matière à poils (2) retenue sur ladite couche dorsale primaire (3) de façon à former une couche supérieure (2, 3), et
une couche dorsale secondaire sous-jacente (5) comprenant une structure de fibres aiguilletées constituée essentiellement de fibres continues ou discontinues contenant un polymère thermoplastique n'absorbant pas l'humidité, qui sont fixées entre elles par chauffage à une température correspondant au moins à la température de ramollissement la plus basse pour les matières fibreuses de la structure de fibres,
ladite couche dorsale secondaire (5) étant retenue sur le dos de ladite couche dorsale primaire (3) au moyen d'une couche adhésive intermédiaire (4) comprenant un liant contenant un polymère organique, qui peut être activé par application de chaleur et a une température réactionnelle qui est plus basse que la température de fusion de la majeure partie de la teneur en matière fibreuse de la structure de fibres, ledit liant n'absorbant essentiellement pas l'humidité après sa liaison, moquette dans laquelle la couche dorsale secondaire (5) a un poids spécifique de 70 à 1000 g/m².

2. Moquette selon la revendication 1, dans laquelle la couche dorsale secondaire a un poids spécifique de 100 à 600 g/m², de préférence de 300 à 600 g/m².

3. Moquette selon la revendication 1, dans laquelle les matières fibreuses thermoplastiques sont sélectionnées dans le groupe comprenant des polymères et des copolymères à base de polyoléfines, de préférence le polypropylène et le polyéthylène; des polyesters, des polyamides et des polyacrylates et leurs combinaisons.

4. Moquette selon la revendication 1, dans laquelle les matières fibreuses thermoplastiques comprennent au moins deux types différents de matière fibreuse ayant une différence de température de ramollissement d'au moins 10°C entre le type de matière fibreuse ayant la température de ramollissement la plus basse et le type de matière fibreuse ayant la deuxième température de ramollissement la plus basse.

5. Moquette selon la revendication 1, dans laquelle la structure de fibres comprend des fibres thermoplastiques qui sont produites par une combinaison de deux types différents de matière fibreuse (fibres à deux constituants), les âmes des fibres individuelles étant constituées d'un type de matière fibreuse et la surface étant constituée d'un autre type de matière fibreuse.

6. Moquette selon la revendication 1, dans laquelle le liant de la couche adhésive (4) est un liant en émulsion qui est constitué d'une solution aqueuse de particules polymères.

7. Moquette selon la revendication 6, dans laquelle le liant est chimiquement réactif et comprend des polymères et/ou des copolymères de polystyrène butadiène, de polyacrylate, d'acrylate de polystyrène, de polyacétate de vinyle ou de nitrile butadiène.

8. Moquette selon la revendication 7, dans laquelle le liant chimiquement réactif comprend par ailleurs une charge thermoplastique.

9. Moquette selon la revendication 6, dans laquelle le liant de la couche adhésive (4) comprend des matières thermoplastiques dispersées dans une suspension de manière à former une pâte.

10. Moquette selon la revendication 1, dans laquelle le liant de la couche adhésive (4) est un adhésif thermoplastique en poudre ou un adhésif thermoplastique fondu à chaud.

11. Moquette selon une ou plusieurs des revendications 8 à 10, dans laquelle les matières thermoplastiques comprennent des polymères et/ou des copolymères de polyoléfines, de polyesters ou de polyamides.

12. Moquette selon la revendication 1, dans laquelle la couche adhésive intermédiaire (4) comprend à la fois une première couche adhésive (couche de pré-revêtement) pour améliorer la rétention de la ou des matières à poils sur la couche dorsale primaire (3) et une couche adhésive secondaire (couche de liaison) pour fixer la rétention de la couche dorsale secondaire (5) sur la couche dorsale primaire (3).

13. Moquette selon la revendication 12, dans laquelle la couche de pré-revêtement comprend un liant en émulsion aqueuse comprenant en option une charge thermoplastique.

14. Moquette selon la revendication 12, dans laquelle le liant est un latex polyacrylique, un latex SBR ou un latex d'acrylate de styrène comprenant en option une charge de polyéthylène.

15. Moquette selon la revendication 12, dans laquelle la couche adhésive secondaire comprend un adhésif fondu, de préférence un adhésif fondu de polypropylène, de polyéthylène ou d'un copolyester.

16. Moquette selon la revendication 12, dans laquelle la couche adhésive secondaire comprend un adhésif thermoplastique en poudre, de préférence un adhésif de polyéthylène en poudre.

17. Moquette selon la revendication 12, dans laquelle la couche adhésive secondaire comprend un liant en émulsion aqueuse, de préférence un latex copolymère de styrène butadiène carboxylé comprenant une charge de polyéthylène.

18. Moquette selon la revendication 1, dans laquelle au moins la couche dorsale secondaire (5) et/ou la couche adhésive (4) comprennent une matière sensiblement recyclable.

19. Moquette selon la revendication 18, dans laquelle la matière recyclable est un polymère.

20. Moquette selon la revendication 18 ou 19, dans laquelle la matière recyclable est imperméable à l'humidité.

21. Moquette selon l'une quelconque des revendications précédentes, dans laquelle la couche dorsale secondaire (5) comprend du polypropylène et la couche adhésive (4) du polyéthylène.

22. Moquette selon l'une quelconque des revendications précédentes, dans laquelle la couche supérieure (2, 3) est constituée d'une couche dorsale primaire (3) et de fils (2) qui y sont piqués et la couche dorsale primaire (3) et la couche dorsale secondaire (5) sont formées individuellement par une feuille non tissée.

23. Moquette selon la revendication 22, dans laquelle la couche dorsale primaire (3) comprend un polyester.

24. Procédé de production d'une moquette (1) selon la revendication 1, comprenant les étapes suivantes:
on produit initialement une matière semi-ouvrée en forme de bande comprenant une matière à poils (2) retenue sur une couche dorsale primaire (3),
on chauffe une couche dorsale secondaire (5) en forme de bande ayant un poids spécifique de 70 à 1000 g/m² et comprenant une structure à fibres aiguilletées constituée essentiellement de fibres continues ou discontinues contenant un polymère thermoplastique n'absorbant pas l'humidité à une température correspondant au moins à la température de ramollissement la plus basse pour les matières fibreuses de la structure à fibres de manière à assurer une fixation mutuelle des fibres,
on joint le dos de la matière semi-ouvrée (2, 3) en forme de bande avec la couche dorsale (5) en forme de bande par intercalage d'une couche adhésive (4), ladite couche adhésive comprenant un liant contenant un polymère organique ayant une température réactionnelle qui est inférieure à la température de fusion de la majeure partie de la teneur en matière fibreuse de la structure de fibres, et on active le liant par application de chaleur de manière à obtenir une couche adhésive liée (4) n'absorbant essentiellement pas l'humidité, et
on enroule la moquette (1) sur des rouleaux de métier large et on découpe en option la moquette totalement ou partiellement en dalles de tapis.

25. Procédé selon la revendication 24, dans lequel la couche dorsale secondaire (5) en forme de bande est chauffée par calandrage à une température qui se situe essentiellement dans une plage de 110 à 260°C.

26. Procédé selon la revendication 24, dans lequel la couche dorsale secondaire (5) en forme de bande est chauffée par soufflage d'air chaud à une température qui se situe essentiellement dans une plage de 110 à 260°C.

27. Procédé selon la revendication 24, dans lequel la couche dorsale secondaire (5) en forme de bande est chauffée par un rayonnement infrarouge à une température qui se situe essentiellement dans une plage de 100 à 260°C.

28. Procédé selon la revendication 24, dans lequel la couche adhésive intermédiaire comprend une pré-application du liant sur le dos de la couche supérieure semi-ouvrée (2, 3) en forme de bande ou sur la face supérieure de la couche dorsale secondaire (5) avant leur jonction.

29. Procédé selon la revendication 24, dans lequel la couche adhésive intermédiaire (4) comprend une première couche adhésive (couche de pré-revêtement) et une deuxième couche adhésive (couche de liaison), ladite première couche de pré-revêtement étant d'abord appliquée au dos de la couche supérieure (2, 3), après quoi la deuxième couche adhésive est appliquée à la couche dorsale secondaire (5) avant leur jonction.

30. Procédé selon la revendication 24, comprenant par ailleurs la découpe de la moquette finie produite (1) en forme de bande au moins transversalement à la direction d'avancement pour former des pièces de moquette de taille souhaitée, par exemple pour utilisation sous forme de dalles de tapis.

31. Procédé selon la revendication 24 pour la production d'un moquette (1) en formant une couche supérieure (2, 3) comprenant une couche dorsale primaire (3), en formant une couche dorsale secondaire (5) et en les assemblant et, par intercalage d'une couche de liaison (4), en joignant mutuellement la couche supérieure (2, 3) et la couche dorsale secondaire (5), procédé dans lequel la rigidité et la matière de la couche dorsale secondaire (5) et de la couche de liaison (4) sont choisies de telle sorte que la moquette ainsi formée ait une stabilité dimensionnelle suffisante lors de changements climatiques pour une application en dalles de tapis et un poids relativement bas et, après avoir été formée, la moquette est enroulée sur ce que l'on appelle des rouleaux de métier large et découpée partiellement en dalles de tapis.

32. Installation d'une moquette selon les revendications 1 à 23 ou fabriquée selon le procédé des revendications 24 à 31 sur un plancher sous-jacent par usage d'une matière adhésive.
